# EUROPEAN PATENT APPLICATION

(11) **EP 3 112 708 A1**
(43) Date of publication of application: **04.01.2017**
(21) Application number: 15175048.6
(22) Date of filing: 02.07.2015
(51) Int. Cl.: F16C 33/66, F16C 33/10, C10M 169/06

(54) **USE OF GREASE COMPOSITIONS**

(71) Applicant: Aktiebolaget SKF, 415 50 Göteborg (SE)
(72) Inventor: ZHOU, Xiao Bo, 3994 PV Houten (NL)
(74) Representative: Tweedlie, Diane Harkness

(57) **Abstract**

The present invention relates to the use of a grease (25) comprising a calcium sulfonate thickener for prolonging bearing life of a bearing (5) that is lubricated with the grease, wherein the bearing is mounted in a machine that is subject to cleaning with a solution comprising a detergent and wherein the calcium sulfonate thickener provides the grease with detergent resistance, such that the grease retains lubricating ability when contaminated with the cleaning solution.

## Description

### FIELD OF THE INVENTION

The present invention relates to the use of particular greases for the lubrication of rolling element bearings, to enhance bearing life in applications where the bearings are mounted in a machine that is subject to regular cleaning.

### BACKGROUND TO THE INVENTION

Machinery used in the processing of foodstuffs is subject to various rules and regulations. For example, the grease used to lubricate moving parts within the machine, such as rolling element bearings, is required to be food-compatible. Furthermore, it is commonly prescribed that the machinery should be cleaned daily. In some cases, high-pressure spray cleaning using a cleaning solution is prescribed. This increases the likelihood that the cleaning solution will penetrate into a rolling element bearing. Even if the bearing is well sealed, it is generally not possible to exclude all contamination.

The manufacturers of food-processing machinery generally recommend that a food-grade grease with excellent water resistance is used to lubricate the bearings in the machine. One example of such a grease is described in JP2014240467A. This document discloses a grease composition in which a base oil is a saturated fatty acid triglyceride comprising an ester of a saturated fatty acid and glycerin and a thickener is a mixture of calcium stearate and aluminum stearate.

There is still room for improvement

### SUMMARY OF THE INVENTION

The present invention is based on the understanding that the use of a grease having excellent water resistance does not necessarily lead to enhanced bearing life of the bearings that are mounted in a machine, such as a food processing machine, that is subject to regular cleaning. The cleaning solution used to wash the machines generally comprises detergent, and the present inventor has found that detergent resistance is the more important factor for enhancing bearing life and extending grease life. The inventor has furthermore found that the use of a calcium sulfonate thickener in a lubricating grease provides the grease with detergent resistance, such that the lubricating properties of the grease are largely retained, even when the grease becomes mixed with a detergent-containing solution. Such use constitutes a first aspect of the invention.

A second aspect of the invention concerns the use of a grease having a calcium sulfonate thickener for prolonging bearing life of a rolling element bearing that is lubricated with the grease, wherein the bearing is mounted in a machine that is subject to cleaning with a solution comprising a detergent, and whereby the calcium sulfonate thickener provides the grease with detergent resistance. In particular, lubricated contacts within the bearing are provided with excellent resistance to oscillating wear.

The rolling element bearing can be a ball bearing or a roller bearing.

Furthermore, a grease with a calcium sulfonate thickener protects against wear when used to lubricate a seal, mounted in a machine subject to cleaning with a solution comprising a detergent. The seal comprises a lip which, during machine operation, is in sliding contact with a counter surface. The counter surface may be a surface of a bearing ring, or a surface of a housing in which the bearing is mounted, or a surface of a shaft which is rotationally supported by the bearing or a surface of wear sleeve or slinger that is mounted on the shaft. Such use constitutes a third aspect of the invention.

Advantages of the present invention will become apparent from the following detailed description and accompanying drawings.

### DESCRIPTION OF THE FIGURES

In the following, the invention is described with reference to the accompanying drawings, in which:
- Fig. 1: shows a part cross-sectional view of a grease-lubricated bearing that is suitable for use in a food-processing machine;
- Fig. 2: is a bar chart of water and detergent resistance for a number of test greases;
- Fig. 3: is a bar chart of life cycles achieved in an oscillating test using a number of test greases in unmodified condition and when mixed with two different detergent solutions;
- Fig. 4: is a bar chart of wear groove depth at a dynamic sliding contact between a seal lip and a counter surface measured when the contact was lubricated with a number of test greases in the presence of detergent contamination.

### DETAILED DESCRIPTION

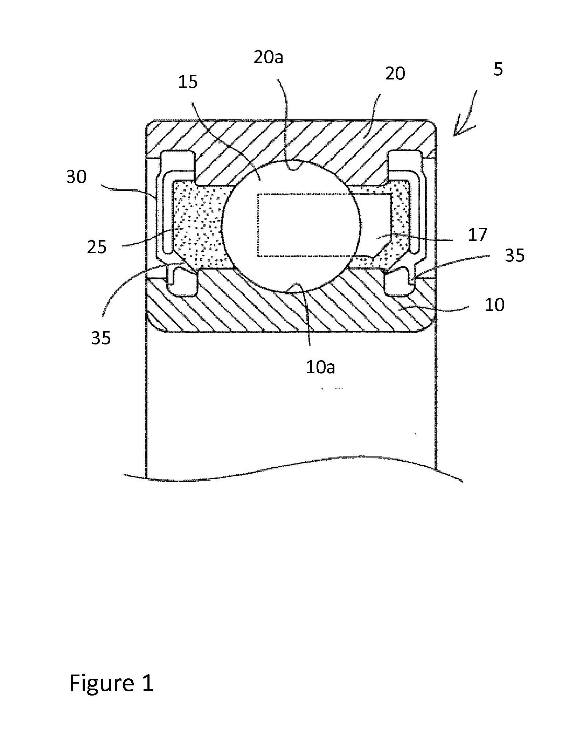

An example of a bearing suitable for use in a food-processing machine is shown in Figure 1. The bearing 5 is a deep-groove ball bearing comprising an inner ring 10, an outer ring 20 and a number of balls 15 disposed within a cavity of the bearing defined between the bearing rings. In use of the bearing, the outer ring 20 is mounted in a housing, the inner ring 10 is mounted to a rotational shaft and the balls 15 run on an outer raceway 20a of the outer ring and on an inner raceway 10a of the inner ring. The balls are retained and guided by a cage 17. To lubricate the rolling contacts between the balls 15 and the raceways 10a, 20a, the bearing is provided with a grease lubricant 25. The grease lubricant is food compatible in accordance with FDA approval. The bearing 5 is further provided with seals 30 at either axial end for retaining the grease within the bearing cavity and for excluding the entry of contaminants. The seals have two contact lips 35 in the depicted example, which bear against the inner ring. Alternatively, the sealing function may be provided by a non-contact seal such as a bearing shield or a labyrinth seal. End caps (not shown) may also be used to provide additional protection against the entry of contamination and moisture.

Let us assume that the machine in which the bearing is mounted is cleaned every day (with a high-pressure spray) using a cleaning solution comprising water and detergent. Let us further assume that despite the sealing, a small amount of the cleaning solution is able to penetrate into the bearing cavity. The cleaning solution will become mixed with the grease lubricant.

In general, moisture has an adverse effect on bearing greases. The lubricating ability of the grease is reduced, enabling surface damage mechanisms such as fretting and wear to occur, which in turn shorten bearing service life. The presence of detergent within the moisture also needs to be considered.

The present inventor has found that greases comprising a calcium sulfonate thickener largely retain their lubricating ability when mixed with a detergent-containing solution. Consequently, when used in an application where the machine is subject to cleaning with a detergent solution - e.g. to lubricate the bearings in a food-processing machine - bearing life can be prolonged. Re-lubrication intervals can also be extended since the grease retains its lubricating ability for longer, in comparison with non-calcium sulfonate greases. Greases with calcium sulfonate thickener can also be used in "greased-for-life" bearings, to lubricate the bearing for the duration of its lifetime.

This will be demonstrated on the basis of the following examples and test results.

Two detergent solutions were prepared, which will be referred to as Solution A and Solution B. Solution A was prepared by mixing 5 wt% of a chlorinated alkaline foaming detergent with water; Solution B was prepared by mixing 5 wt% of an acid foaming detergent with water

Next, a number of grease mixtures were prepared by adding 20 wt% of Solution A and 20 wt% of Solution B to a number of test greases. For each test grease, the mixture comprising Solution A will be referred to as Mixture A and the mixture comprising Solution B will be referred to as Mixture B.

The following table shows the thickener material and base oil of each test grease and its designation. All of the test greases are commercially available as food-grade greases.

**Table 1: test greases**

| Test grease designation | Thickener | Base oil |
|---|---|---|
| Grease A | Aluminium complex | PAO oil (Polyalfaolefin) |
| Grease B | Aluminium complex | Mineral oil |
| Grease C | Silica | PAO oil |
| Grease D | Bentonite clay | PAO oil |
| Grease E | Polytetrafluoroethylene (PTFE) | PFPE oil (Perfluorinated polyether) |
| Grease F | Calcium Sulfonate | Mineral oil |
| Grease G | Calcium Sulfonate | Mineral oil |
| Grease H | Calcium Sulfonate | PAO oil |
| Grease I | Calcium Sulfonate | Mineral oil |
| Grease J | Calcium Sulfonate | Mineral oil |

### Test results

### Water and detergent resistance test

As mentioned previously, greases with excellent water resistance are generally recommended in applications where the machine is regularly cleaned. A water-resistance test according to DIN 51807 may be performed to determine water resistance.

In the test according to DIN 51807, a layer of grease (3x15x190 mm) is coated on a strip of glass. The glass strip is then submerged in demineralized water for 3 hours at 90 °C. Thereafter, a visual inspection is performed to determine how much of the grease remains on the strip, whereby a resistance index of between 0 and 3 is assigned. A resistance index of 0 indicates no change; an index of 3 indicates significant change.

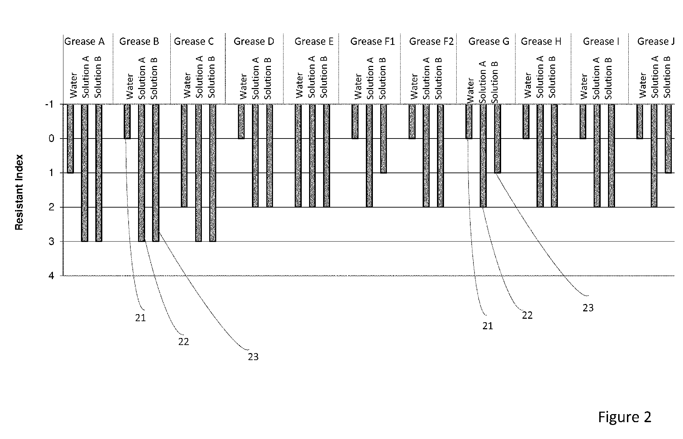

This test was performed for each test grease, whereby two different batches of Grease F (Grease F1 and Grease F2) were used. In addition, the test was repeated using Solution A and Solution B as the liquid in which the prepared glass strips were submerged. The results are shown in the bar chart of Figure 2.

For each test grease, the bars from left to right 21, 22, 23 show the resistance index that was determined after submersion in water, Solution A and Solution B respectively. Not all bars have been provided with a reference numeral, so as not to obscure the figure.

Grease B, for example, has a low value of resistance index in water, indicating excellent water resistance. After immersion in Solution A and Solution B, however, significant change was observed on the coated grass strips. The resistance index increased to 3, indicating that this grease has poor detergent resistance.

All of the calcium sulfonate Greases F1, F2, G, H, I and J exhibit good detergent resistance.

### Oscillating test

For each test grease, a Mixture A and a Mixture B was prepared as described above. Again, two batches of Grease F were used. Mixture A, Mixture B and an unmodified sample of each test grease were then used as the lubricant in an oscillating test.

In the oscillating test, a steel ball exerting a load pressure of 1 GPa is moved back and forth on a steel plate with a stroke of 0.1 mm and a frequency of 20 Hz. The friction coefficient of the lubricated contact is measured. The test is run until the measured friction coefficient reaches a predefined value that is indicative of lubrication failure. If the predefined value is not reached after 15000 cycles, this is indicative of good resistance to oscillating wear and good lubrication film build-up and the test is generally stopped.

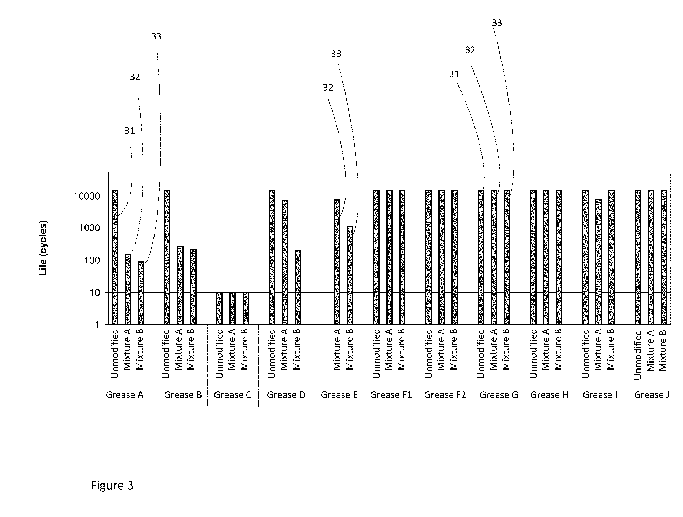

The results of the oscillating test are shown in the bar chart of figure 3. Three bars are shown for each test grease, with the exception of Grease E. The bars with reference numerals 31, 32 and 33 represent the number of cycles achieved using the unmodified sample, Mixture A and Mixture B respectively of the test grease in question. Not all bars have been provided with a numeral so as not to obscure the drawing.

In unmodified condition, the non-calcium sulfonate Greases A, B and D attain the same number of cycles and have an equivalent resistance to oscillating wear as the calcium sulfonate Greases F1, F2, G, H, I and J. Mixtures A and B of the aforementioned non-calcium sulfonate greases, however, achieve a lower number of cycles in the oscillating test. In particular, Mixture B (comprising acid foaming detergent) of Greases A, B, D and E exhibits poor resistance to oscillating wear. The calcium sulfonate Greases F1, F2, G, H, I and J, by contrast, exhibit a highly stable wear resistance when a detergent solution is present in the grease.

Consequently, a bearing in a machine that is subject to cleaning with a detergent solution is much less likely to experience oscillating wear damage when lubricated with a grease having a calcium sulfonate thickener. As a result, bearing life and grease life can be extended.

It has also been found that greases with a calcium sulfonate thickener provide excellent wear resistance when used to lubricate the dynamic seals in a machine that subject to cleaning with a detergent solution. Referring to Figure 1, the seal 30 of the bearing 5 has two contact lips 35, typically made of an elastomeric material, which bear against the inner ring 10. Under dynamic conditions, the lips 35 are in sliding contact with the inner ring and are therefore subject to wear. In applications where cleaning with a detergent solution takes place, the grease used to lubricate this sliding contact should also be able to retain its lubricating ability in the present of the detergent solution.

A test was carried out to determine the wear performance of greases used to lubricate a sealing contact. A test bearing sealed at each axial side with radial lip seal, having a contact lip made of NBR, was run at a speed of 1000 rpm under a load of 254 N for 500 hours. During the test, droplets of Solution A were dripped onto the inner ring at an environment side of one of the seals, at a rate of 5 drops per minute. The test was carried out using three of the test greases to lubricate the sealing contacts: Grease A (Al complex thickener), Grease F and Grease G (calcium sulfonate thickener).

Dynamic contact seals bear against a counter surface. In the bearings used in the test, the contact lip of the radial seal bears against an outer circumferential surface of the bearing inner ring. During dynamic sealing, a wear groove can develop in the outer circumferential surface, if the sealing contact is inadequately lubricated.

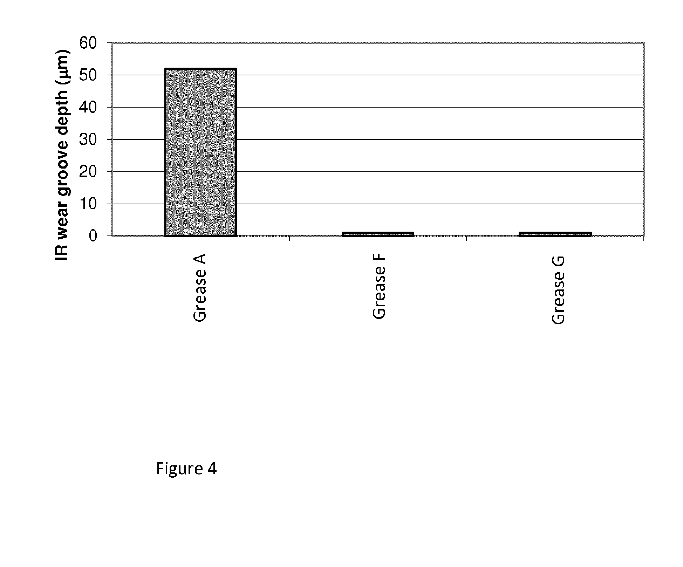

At the end of each test, the bearing inner ring was examined and the depth of the wear groove was measured. The results are shown in the bar chart of Figure 4.

The test bearing lubricated with Grease A had developed a deep wear groove at sealing contact on both sides of the bearing. The average groove depth was 52 µm. The presence of detergent had seriously affected the lubricating ability of the Al complex grease. By contrast, the test bearing lubricated with each of the calcium sulfonate greases exhibited barely any wear at the sealing contacts. The average groove depth on the outer circumferential of the inner ring was smaller than 1 µm.

Consequently, calcium sulfonate greases may also be used to protect against wear in the sliding contact between a seal lip and a counter surface when there is a likelihood of detergent entering the bearing.

## Claims

1. Use of a grease (25) comprising a calcium sulfonate thickener for prolonging bearing life of a rolling element bearing (5) that is lubricated with the grease, wherein the bearing is mounted in a machine that is subject to cleaning with a solution comprising a detergent, whereby the calcium sulfonate thickener provides the grease with detergent resistance, such that the grease retains lubricating ability when contaminated with the cleaning solution.

2. Use according to claim 1, wherein the grease (25) is further used to provide lubricated contacts of the bearing with resistance to oscillating wear.

3. Use according to claim 1, wherein the grease (25) is further used to prolong a re-lubrication interval of the bearing (5), or to lubricate the bearing for its entire life.

4. Use of a grease (25) comprising a calcium sulfonate thickener to lubricate a seal (30) having a contact lip (35), wherein the seal is mounted in a machine that is subject to cleaning with a solution comprising a detergent and wherein during operation of the machine, the contact lip is in sliding contact with a counter surface, wherein the grease (25) is further used to protect against wear of the counter surface when contaminated with the cleaning solution.

5. Use of a calcium sulfonate thickener in a grease for providing the grease with detergent resistance, such that the grease retains lubricating ability when contaminated with a solution comprising detergent.
